(19) Europäisches Patentamt
European Patent Office
Office européen des brevets

(11) **EP 4 517 603 A1**

(12) **EUROPEAN PATENT APPLICATION**

(43) Date of publication:
**05.03.2025 Bulletin 2025/10**

(21) Application number: 23194518.9

(22) Date of filing: **31.08.2023**

(51) International Patent Classification (IPC):
**G06N 7/01** *(2023.01)*  **G06V 20/56** *(2022.01)*
**G06V 10/764** *(2022.01)*  **G06N 3/04** *(2023.01)*
**G06N 3/08** *(2023.01)*

(52) Cooperative Patent Classification (CPC):
**G06N 3/08; G06F 18/2178; G06F 18/2415;**
**G06N 3/04; G06N 7/01**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Fischer, Volker**
 **71272 Renningen (DE)**
• **Verma, Rajeev**
 **1018 Amsterdam (NL)**
• **Nalisnick, Eric**
 **1018 Amsterdam (NL)**

Remarks:
Amended claims in accordance with Rule 137(2)
EPC.

(54) **DEVICE AND COMPUTER-IMPLEMENTED METHOD MACHINE LEARNING**

(57) A device and a computer-implemented method for machine learning, wherein the method comprises providing an input (101) for a model (200), determining with the model (200) a first classification that indicates a class for the input (101), determining with the model (200) depending on the input (101) a likelihood that an expert determines a correct classification for the input (101), determining with the model (200) depending on the input (101) a likelihood that the input (101) is in-distribution data or out-of-distribution data with respect to a distribution of data that the model (200) is trained on, determining a second classification that indicates whether the input (101) is considered as in-distribution data or out-of-distribution data with respect to the distribution of data that the model (200) is trained on depending on the first classification and depending on the likelihoods, determining an output (105) of the model (200) depending on the first classification and the second classification, and outputting the output (105).

Fig. 2

**Description**

Background

The invention relates to a device and a computer-implemented method for machine learning.

For machine learning systems, it is desirable to provide a reliable classification of the input in particular in the event of a shift of a distribution of the input that is presented to the classifier in inference as compared to a distribution of the input that is presented to the classifier in training.

Disclosure of the invention

The device and the computer-implemented method according to the independent claims provide a reliable machine learning.

The method for machine learning comprises providing an input for a model, determining with the model a first classification that indicates a class for the input, determining with the model depending on the input a likelihood that an expert determines a correct classification for the input, determining with the model depending on the input a likelihood that the input is in-distribution data or out-of-distribution data with respect to a distribution of data that the model is trained on, determining a second classification that indicates whether the input is considered as in-distribution data or out-of-distribution data with respect to the distribution of data that the model is trained on depending on the first classification and depending on the likelihoods, determining an output of the model depending on the first classification and the second classification, and outputting the output. This provides a reliable out-of-distribution detection for a machine learning system. The resulting machine learning system mitigates using output that is based on input that is out-of-distribution.

According to some embodiments, the output comprises a control signal for a technical system, in particular a physical system, preferably a robot, a vehicle, a household appliance, a power tool, a personal assist system, an access control system, a medical imaging device.

According to some embodiments, the input comprises a sensor signal, in particular audio data or a digital image, preferably from a camera, a radar sensor, a lidar sensor, an infrared sensor, an ultrasound sensor, or a motion sensor.

Determining the output may comprise determining that the second classification indicates that the input is considered as in-distribution data, wherein the output is determined depending on the first classification if the second classification indicates that the input is considered as in-distribution data. This means, the output is used when it is considered as in-distribution data.

Determining the output may comprise determining that the second classification indicates that the input is considered as out-of-distribution data and rejecting first classification. This means, the output is not used when it is considered as out-of-distribution data.

Determining the output may comprise providing the input and/or the first classification to an expert, in particular to a classifier outside the model or via a human machine interface to a human, and determining the output depending on a response to the input and/or the first classification from the expert if the second classification indicates that the input is considered as out-of-distribution data. This means the input is deferred to the expert, when it is considered as out-of-distribution data. The expert may be another machine learning system. This provides a hybrid machine learning system. The expert may be human. This provides a hybrid intelligent system that combines human and machine intelligence.

The device for machine learning, comprises at least one processor and at least one memory, wherein the at least one processor is configured to execute instructions that, when executed by the at least one processor, cause the device to execute the method, wherein the at least one memory is configured to store the instructions.

A computer program comprises instructions that, when executed by the computer, cause the computer to execute the method.

Further advantageous embodiments are derived from the following description and the drawing. In the drawing:

Fig. 1    schematically depicts a part of a device for machine learning,
Fig. 2    schematically depicts a part of a model for machine learning,
Fig. 3    depicts a flow chart with steps of a computer-implemented method for machine learning.

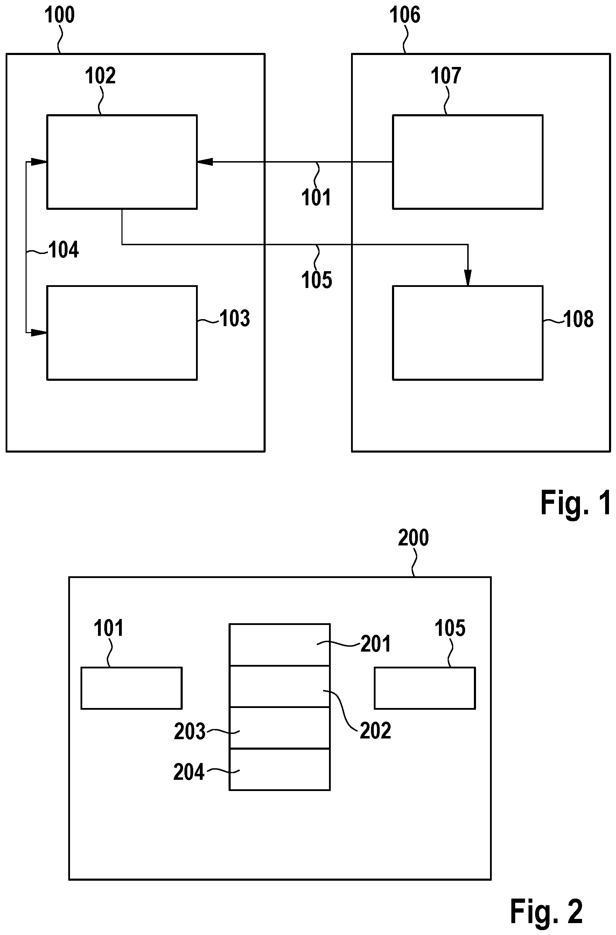

Figure 1 schematically depicts a device 100 for machine learning. The device 100 is configured to receive input 101. The device 100 comprises at least one processor 102 and at least one memory 103. The at least one processor 102 and the at least one memory 103 communicate via a data connection 104.

The device 100 is configured for outputting an output 105 to a technical system 106. The device 100 is configured for receiving the input 101 from the technical system 106. The technical system 106 is a physical system. The technical system 106 may be a robot, a vehicle, a household appliance, a power tool, a personal assist system, an access control system, a medical imaging device. The technical system 106 may comprise the device 100.

The technical system 106 comprises a sensor 107 for monitoring the technical system 106 that is configured to determine the input 101. The sensor 107 may be a camera, a radar sensor, a lidar sensor, an infrared sensor, an ultrasound sensor, or a motion sensor. The device 100 is configured to receive the input from the sensor 107. The device 100 may comprise the sensor 107.

The technical system 106 comprises an actuator 108 that is configured to actuate the technical system 106 depending on the output 105. The device 100 is configured to control the actuator 108 depending on the output 105.

The actuator 108 may be configured to move the technical system 106 or a part thereof. The actuator 108 may comprise a human machine interface that is configured to output the output 105 to a human. The device 100 may comprise the actuator 108.

The at least one processor 102 is configured to execute instructions that, when executed by the at least one processor 102, cause the device 100 to execute a method for determining the classification. The at least one memory 103 is configured to store the instructions.

The device 100 may be a computer. A computer program may comprise the instructions. The computer may be configured to execute the instructions to cause the computer to execute the method.

Figure 2 schematically depicts a part of a model 200 for machine learning. The model 200 is configured to determine the output 105 depending on the input 101.

According to an example, the model 200 comprises a feature space X and an output space Y, wherein the output space Y comprises K classes. The input 101 may be sampled from a data set $D = \{x_n, y_n, m_n\}_{n=1}^{N}$ where $x_n$ denotes an input 101 and $y_n$ denotes an output, e.g., the classification.

The model 200 comprises a classifier 201. The model 200 comprises a rejector 202. The model 200 comprises an estimator 203. The model 200 comprises an interface 204 to an expert. The expert may be an expert system or a human expert. The model 200 may comprise the expert system. The interface 204 may be a human-machine interface. According to an example, the expert provides a classification $m_n$ from a space M, wherein M=Y.

The classifier 201 is configured to determine, depending on the input 101, a first classification that indicates a class for the input 101. According to an example, the classifier 201 comprises a function $h: X \rightarrow Y$.

The estimator 203 is configured to determine, depending on the input 101, a likelihood that the expert determines a correct classification for the input 101. The estimator 203 is configured to determine, depending on the input 101, a likelihood that the input 101 is in-distribution data or out-of-distribution data with respect to a distribution of data that the model 200 is trained on.

The rejector 202 is configured to determine, depending on the input 101 and depending the on likelihoods, a second classification that indicates whether the input 101 is considered as in-distribution data or out-of-distribution data with respect to the distribution of data that the model 200 is trained on. According to an example, the rejector 202 comprises a function $r: X \rightarrow \{0,1\}$.

According to an example, the model 200 is configured to defer the classification to the expert when $r(x) = 0$ and to output the first classification when $r(x) = 1$. This means, r acts as a filter on which classification is used as output 105.

The interface 204 is configured to prompt the expert for a classification of the input 101 and to receive the classification from the expert. The model 200 may be configured to prompt the expert for the classification only when the second classification indicates that the input 101 is considered as out-of-distribution data with respect to the distribution that the model 200 is trained on.

The model 200 is configured to output the output 105. The model 200 is configured to output the classification of the classifier 201 or the expert depending on the second classification. The model 200 is configured to output the classification of the classifier when the second classification indicates that the input 101 is considered as in-distribution data with respect to the distribution that the model 200 is trained on. The model 200 is configured to output the classification of the expert when the second classification indicates that the input 101 is considered as out-of-distribution data with respect to the distribution that the model 200 is trained on.

The model 200 may be configured to reject the classification of the classifier without prompting the expert for the classification or without outputting the classification of the expert when the second classification indicates that the input 101 is considered as out-of-distribution data with respect to the distribution that the model 200 is trained on.

The model 200 may be configured to determine a control signal for the technical system 106 depending on the classification.

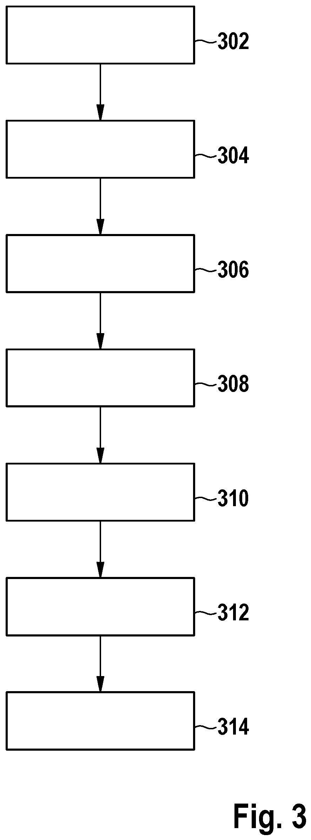

Figure 3 depicts a flow chart with steps of the method for machine learning. The method in the example is a computer-implemented method. The model that is used in the method is trained on a distribution of the data D.

According to an example, training comprises fitting the functions *h* and *r*. For example, when $r(x) = 0$ a loss $l(h(x), y)$ is incurred and when $r(x) = 1$ a loss $l_{exp}(m, y)$ is incurred. In the example, both losses are a canonical 0-1 misclassification loss. The goal is learning to minimize the following objective function:

$$L_{0-1}(h,r) = E_{x,y,m}\left[\left(1 - r(x)\right)I[h(x) \neq y] + r(x)(I[m \neq y] + c)\right]$$

wherein E is the expectancy value and $I[\cdot]$ is 1 in case the content of $I[\cdot]$ is true or 0 otherwise, wherein c is a cost incurred to query the expert.

However, one cannot directly minimize the above objective function. In the example, K+1 parameterized surrogate loss functions $g_k: X \to \mathbb{R}$ and a function $g\perp: X \to [0,1]$ are defined to minimize to following surrogate loss:

$$\Phi_{\mathrm{SM}}(g_1, \dots, g_K, g_\perp; x, y, m)$$
$$= -\log\left(\frac{\exp\{g_y(x)\}}{\sum_{y' \in y\perp} \exp\{g_{y'}(x)\}}\right) - I[m = y]\log\left(\frac{\exp\{g_\perp(x)\}}{\sum_{y' \in y\perp} \exp\{g_{y'}(x)\}}\right)$$

wherein c=0.

The output of the function $g_k(x)$ is an example for the first classification.

The output of the function $g_\perp(x)$ is an example for a likelihood that the expert correctly determines whether the input x is in-distribution data or out-of-distribution data with respect to a distribution of data that the model 200 is trained on.

Learning comprises minimizing this surrogate loss to get $g_K^*$ and $g_\perp$.

According to an example, the functions $r(x)$ and $h(x)$ are:

$$r(x) = I\left[\gamma(g_\perp(x) - c * \alpha(x) \geq \max_k \gamma\big(g_k(x)\big)\right]$$

$$h(x) = arg\max_{k \in [1,K]} \gamma\big(g_k(x)\big)$$

wherein the function $\alpha$ in the example has a range of [0,1] and the function $\gamma: \mathbb{R} \to$ [0,1] in the example is a SoftMax function.

The function $\alpha(x)$ is selected to be close to zero for input x that is far out-of-distribution and close to one for input x that resembles training in-distribution data. Any function $\alpha(x)$ that satisfies this two conditions may be used.

For example, the function $\alpha(x) = p_\Theta(x)$ is provided as

$$p_\Theta(x,y) = \frac{\exp(-E_\Theta(x,y))}{Z(\Theta)}$$

wherein

$$Z(\Theta) = \int_x -E_\Theta(x)$$

Considering

$$E_\Theta(x,y) = -g_y(x)$$

and then marginalizing out x results in $p_\Theta(x)$ oc $\Sigma_{y \in Y} \exp(g_y(x))$, i.e. $p_\Theta(x)$ is directly proportional to $\Sigma_{y \in Y} \exp\{g_y(x)\}$.

For example, the function $\alpha(x)$ is provided by an additional generative model, e.g., normalizing flows, that models a density $p(x)$ of the training distribution:

$$\alpha(x) = p(x)$$

For example, the density $p(x)$ is estimated by

$$z := \sum_{y \in Y} \exp\{g_y(x)\}$$

and a function $n: z \to [0,1]$ that maps z to the desired range [0,1]. An example for $n(z)$ is

$$n(z) = \frac{1}{1 + \exp\{-mz\}}$$

wherein $m \in \mathbb{R}$ is a hyperparameter.

According to an example, a validation set $V = \{x_i, y_i\}_{i=1}^N$ is provided and an empirical cumulative distribution function F of the set $\{z_i; z_i = \sum_{y \in Y} \exp\{g_y(x_i)\}\}_{i=1}^N$ is provided. For a new test sample $x_n$ this means

$$\alpha(x_n) = F(x_n)$$

In the example, c is a given constant parameter for a cost associated with deferring to the expert. The constant parameter c may be selected in a range of [0,1] depending on whether there is no cost whatsoever ($c = 0$) or expert's advise is expensive ($c = 1$). A typical value for the constant parameter c is in between 0 and 1, subject to the condictions of the application.

According to an example, the output of the function $\alpha(x)$ is determined for the input x. This means, the likelihood whether the input x is in-distribution or out-of-distribution with respect to the distribution of the data that the model 200 is trained on, is determined.

In the example $\alpha(x)$ ranges in [0,1] with, ideally, 0 for out-of-distribution data and, ideally, 1 for in-distribution data. The product $c\alpha(x)$ has the effect to decrease an overall cost of rejection, resulting in increased rejection upon exposure to severe out-of-distribution data.

According to an example, the output of the function $g_\perp(x)$ is determined for the input x. This means, the likelihood that the expert will provide the correct prediton for the input x as in-distribution data or out-of-distribution data with respect to the distribution of data that the model 200 is trained on, is determined.

According to an example, the output of the function r(x) is determined for the input x, depending on the output of the function $\alpha(x)$ and the output of the function $g_\perp(x)$. This means, the second classification is determined depending on the first classification $g_k(x)$ and depending on the likelihoods, e.g., the outputs of the functions $\alpha(x)$, $g_\perp(x)$ for the input x. Based on the output of the first classification $g_k(x)$, the output of the second classification is adjusted to allow for distributional properties, i.e., if the input is unfamiliar to the trained model, the likelihood of it being rejected and passed on to the expert is increased.

The output of the function h(x) is determined depending on the input x. The output of the function h(x) is a classification of the input x.

In inference, the input 101 of the model 200 may be within the distribution of data, i.e., in-distribution, or outside of the distribution of data, i.e., out-of-distribution.

The model 200 in the example comprises a neural network that is trained with inputs 101 from the distribution of data. The input 101 may be a sensor signal, in particular audio data or a digital image. In training, the input 101 may be provided with a ground truth class. The model 200 is for example trained to determine a classification of the input 101 that indicates the ground truth class.

The method comprises a step 302.

The step 302 comprises providing the input 101 for the model 200.

The method comprises a step 304.

The step 304 comprises determining with the model 200 the first classification that indicates a class for the input 101.

The method comprises a step 306.

The step 306 comprises determining with the model 200 depending on the input 101 a likelihood that an expert determines a correct classification for the input 101.

The method comprises a step 308.

The step 308 comprises determining with the model 200 depending on the input 101 a likelihood that the input 101 is in-distribution data or out-of-distribution data with respect to the distribution of data that the model 200 is trained on.

The method comprises a step 308.

The step 308 comprises determining the second classification that indicates whether the input 101 is considered as in-distribution data or out-of-distribution data with respect to the distribution of data that the model 200 is trained on.

The second classification is determined depending on the first classification and depending on the likelihoods.

An example for determining the second classification is

The method comprises a step 312.

The step 312 comprises determining an output 105 of the model 200 depending on the first classification and the second classification.

According to an example, the output 105 comprises a control signal for the technical system 106. The control signal may be determined by the model 200 depending on the classification. According to an example, the output 105 comprises the classification.

Determining the output 105 comprises for example determining either that the second classification indicates that the input 101 is considered as in-distribution data or as out-of-distribution data.

In the example, the output 105 comprises a classification of the input 101 that is determined depending on the first classification or comprises a control signal that is determined depending on the first classification if the second classification indicates that the input 101 is considered as in-distribution data. In the example, the first classification is rejected otherwise.

According to the example, the output 105 comprises the classification provided by the expert or the control signal that is determined depending on the classification that is provided by the expert if the second classification indicates that the input 101 is considered as out-of-distribution data.

The input 101 and/or the first classification may be provided to the expert in order to receive the classification from the expert.

The expert may be a classifier outside the model 200 that provides the classification of the expert. The human expert may be prompted for the classification via the human machine interface.

The classification may be provided by the expert in a response to the input 101 and/or the first classification. According to an example, the expert is prompted for the response only if the second classification indicates that the input 101 is considered as out-of-distribution data.

The method comprises a step 314.

The step 314 comprises outputting the output 105.

Outputting the output 105 may result in outputting the classification e.g., via the human-machine interface or to the actuator 108 for actuating the technical system 106 depending on the classification. Outputting the output 105 may result in outputting the control signal to the actuator 108 for actuating the technical system 106 depending on the classification.

In an example of a movable technical system 106, the first classification may comprise a first class indicating that a movement of the technical system 106 shall stop and a second class indicating that the movement of the technical system 106 may proceed. In the example of the movable technical system 106, the input 101 may be a digital image of an environment of the technical system 106. The method may comprise actuating the actuator 108 to stop the technical system 108 when the first class is determined by the first classification or the expert. The method may comprise actuating the actuator 108 to proceed moving the technical system 108 when the second class is determined by the first classification or the expert. Instead of using the first class for stopping the first class may be used for changing a trajectory of a movement of the technical system 106. The digital image may comprise an object that is present in the environment. Stopping or changing the movement may be used for avoiding a collision of the technical system 106 or a part thereof with the object in the environment.

**Claims**

1. A computer-implemented method for machine learning, **characterized by** providing (302) an input (101) for a model (200), determining (304) with the model (200) a first classification that indicates a class for the input (101), determining (306) with the model (200) depending on the input (101) a likelihood that an expert determines a correct classification for the input (101), determining (308) with the model (200) depending on the input (101) a likelihood that the input (101) is in-distribution data or out-of-distribution data with respect to a distribution of data that the model (200) is trained on, determining (310) a second classification that indicates whether the input (101) is considered as in-distribution data or out-of-distribution data with respect to the distribution of data that the model (200) is trained on depending on the first classification and depending on the likelihoods, determining (312) an output (105) of the model (200) depending on the first classification and the second classification, and outputting (314) the output (105).

2. The method according to claim 1, **characterized in that** the output (105) comprises (312) a control signal for a technical system (106), in particular a physical system, preferably a robot, a vehicle, a household appliance, a power tool, a personal assist system, an access control system, a medical imaging device.

3. The method according to one of the previous claims, **characterized in that** the input (101) comprises (302) a sensor signal, in particular audio data or a digital image.

4. The method according to one of the previous claims, **characterized in that** determining (312) the output (105) comprises determining that the second classification indicates that the input (101) is considered as in-distribution data, wherein the output (105) comprises the classification of the input that is determined depending on the first classification if the second classification indicates that the input (101) is considered as in-distribution data.

5. The method according to one of the previous claims, **characterized in that** determining (312) the output (105) comprises determining that the second classification indicates that the input (101) is considered as out-of-distribution data and rejecting first classification.

6. The method according to one of the previous claims, **characterized in that** determining (312) the output (105) comprises providing the input (101) and/or the first classification to an expert, in particular to a classifier outside the model (200) or via a human machine interface to a human, and determining the output (105) depending on a response to the input (101) and/or the first classification from the expert if the second classification indicates that the input (101) is considered as out-of-distribution data.

7. A device (100) for machine learning, **characterized by** at least one processor (102) and at least one memory (103), wherein the at least one processor (102) is configured to execute instructions that, when executed by the at least one processor (102), cause the device (100) to execute the method according to one of the claims 1 to 6, wherein the at least one memory (103) is configured to store the instructions.

8. The device (100) according to claim 7, **characterized in that** the device (100) is configured to receive the input (101) from a sensor (107) for monitoring a technical system (106), preferably from a camera, a radar sensor, a lidar sensor, an infrared sensor, an ultrasound sensor, or a motion sensor or that the device (100) is configured to control an actuator (108) of a technical system (106) depending on the output (105).

9. Computer program, **characterized in that** the computer program comprises instructions that, when executed by the computer, cause the computer to execute the method according to one of the claims 1 to 6.

**Amended claims in accordance with Rule 137(2) EPC.**

1. A computer-implemented method for machine learning, **characterized by** providing (302) an input (101) for a model (200), determining (304) with the model (200) a first classification that indicates a class for the input (101), determining (306) with the model (200) depending on the input (101) a likelihood that an expert determines a correct classification for the input (101), determining (308) with the model (200) depending on the input (101) a likelihood that the input (101) is in-distribution data or out-of-distribution data with respect to a distribution of data that the model (200) is trained on, determining (310) a second classification that indicates whether the input (101) is considered as in-distribution data or out-of-distribution data with respect to the distribution of data that the model (200) is trained on depending on the first classification and depending on the likelihoods, determining (312) an output (105) of the model (200) depending on the first classification and the second classification, and outputting (314) the output (105), wherein the input (101) comprises (302) a sensor signal, wherein determining (312) the output (105) comprises providing the input (101) to the expert, and determining the output (105) depending on a response to the input (101) from the expert if the second classification indicates that the input (101) is considered as out-of-distribution data.

2. The method according to claim 1, **characterized in that** the output (105) comprises (312) a control signal for a technical system (106), in particular a physical system, preferably a robot, a vehicle, a household appliance, a power tool, a personal assist system, an access control system, a medical imaging device.

3. The method according to one of the previous claims, **characterized in that** the input (101) comprises (302) audio data or a digital image as the sensor signal.

4. The method according to one of the previous claims, **characterized in that** determining (312) the output (105) comprises determining that the second classification indicates that the input (101) is considered as in-distribution data, wherein the output (105) comprises the classification of the input that is determined depending on the first classification if the second classification indicates that the input (101) is considered as in-distribution data.

5. The method according to one of the previous claims, **characterized in that** determining (312) the output (105) comprises determining that the second classification indicates that the input (101) is considered as out-of-distribution data and rejecting first classification.

6. The method according to one of the previous claims, **characterized in that** determining (312) the output (105) comprises providing the input (101) and the first classification to an expert, in particular to a classifier outside the model (200) or via a human machine interface to a human, and determining the output (105) depending on a response to the input (101) and the first classification from the expert if the second classification indicates that the input (101) is considered as out-of-distribution data.

7. A device (100) for machine learning, **characterized by** at least one processor (102) and at least one memory (103), wherein the at least one processor (102) is configured to execute instructions that, when executed by the at least one processor (102), cause the device (100) to execute the method according to one of the claims 1 to 6, wherein the at least one memory (103) is configured to store the instructions.

8. The device (100) according to claim 7, **characterized in that** the device (100) is configured to receive the input (101) from a sensor (107) for monitoring a technical system (106), preferably from a camera, a radar sensor, a lidar sensor, an infrared sensor, an ultrasound sensor, or a motion sensor or that the device (100) is configured to control an actuator (108) of a technical system (106) depending on the output (105).

9. Computer program, **characterized in that** the computer program comprises instructions that, when executed by the computer, cause the computer to execute the method according to one of the claims 1 to 6.

Fig. 1

Fig. 2

**Fig. 3**

Europäisches
Patentamt

European
Patent Office

Office européen
des brevets

# EUROPEAN SEARCH REPORT

**Application Number**

EP 23 19 4518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/243329 A1 (BOSCH GMBH ROBERT [DE]) 24 November 2022 (2022-11-24) * claims 1,3,7 * * page 7, line 4 - line 6 * * page 5, line 20 - line 22 * ----- | 1-9 | INV. G06N7/01 G06V20/56 G06V10/764 G06N3/04 G06N3/08 |
| A | Mozannar Hussein ET AL: "Consistent Estimators for Learning to Defer to an Expert", arXiv (Cornell University), 25 January 2021 (2021-01-25), XP093131246, Ithaca DOI: 10.48550/arxiv.2006.01862 Retrieved from the Internet: URL:https://arxiv.org/pdf/2006.01862v3.pdf [retrieved on 2024-02-14] * Sections 1-4 * ----- | 1,6 | |
| A | US 11 586 214 B2 (GATIK AI INC [US]) 21 February 2023 (2023-02-21) * claims 1-3 * ----- | 1-9 | |
| A | LIN HEGUANG ET AL: "Adaptive Out-of-Distribution Detection with Human-in-the-Loop", ICML 2022 WORKSHOP ON HUMAN-MACHINE COLLABORATION AND TEAMING, 17 July 2022 (2022-07-17), XP093130865, Retrieved from the Internet: URL:https://ramyakv.github.io/Adaptive-OOD-Detection-Human-in-the-loop.pdf> * Sections 1-2 * ----- | 1,6 | **TECHNICAL FIELDS SEARCHED (IPC)** G06N G06V |
| A | EP 4 105 847 A1 (BOSCH GMBH ROBERT [DE]) 21 December 2022 (2022-12-21) * paragraph [0039] - paragraph [0047]; claim 1 * ----- | 1,7,9 | |

The present search report has been drawn up for all claims

| Place of search | Date of completion of the search | Examiner |
|---|---|---|
| The Hague | 14 February 2024 | Targon, Valerio |

EPO FORM 1503 03.82 (P04C01)

## ANNEX TO THE EUROPEAN SEARCH REPORT
## ON EUROPEAN PATENT APPLICATION NO.

**EP 23 19 4518**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-02-2024**

| Patent document cited in search report | | Publication date | Patent family member(s) | | Publication date |
|---|---|---|---|---|---|
| WO 2022243329 | A1 | 24-11-2022 | CN | 117355848 A | 05-01-2024 |
| | | | DE | 102021205274 A1 | 24-11-2022 |
| | | | WO | 2022243329 A1 | 24-11-2022 |
| US 11586214 | B2 | 21-02-2023 | CA | 3180999 A1 | 09-12-2021 |
| | | | EP | 4162338 A1 | 12-04-2023 |
| | | | JP | 2023528078 A | 03-07-2023 |
| | | | US | 11157010 B1 | 26-10-2021 |
| | | | US | 2022011776 A1 | 13-01-2022 |
| | | | US | 2022026913 A1 | 27-01-2022 |
| | | | US | 2022214693 A1 | 07-07-2022 |
| | | | US | 2022236737 A1 | 28-07-2022 |
| | | | US | 2023152816 A1 | 18-05-2023 |
| | | | WO | 2021247082 A1 | 09-12-2021 |
| EP 4105847 | A1 | 21-12-2022 | NONE | | |

EPO FORM P0459

For more details about this annex : see Official Journal of the European Patent Office, No. 12/82